# EUROPEAN PATENT APPLICATION

(11) **EP 1 796 388 A1**
(43) Date of publication of application: **13.06.2007**
(21) Application number: 05111957.6
(22) Date of filing: 12.12.2005
(51) Int. Cl.: H04N 7/16

(54) **Smart card with data storage, set-top box, portable player for operating smart card with data storage and method for manufacturing smart card with data storage**

(71) Applicant: ADVANCED DIGITAL BROADCAST S.A., 1218 Grand-Saconnex (CH)
(72) Inventor: Lambinet, Philippe, 1218 Grand-Saconnex (CH)
(74) Representative: Hudy, Ludwik

(57) **Abstract**

In a smart card (100) with memory blocks (110, 120, 130) and a processor (140), one of the memory blocks (110) has a decryption keys area for storing decryption keys (111) and at least one of the memory blocks, which is non-volatile memory (130), has data storage area (131) for storing data sets, whereas the processor (140) is provided with a decryption keys interface (141) for handling requests for the decryption keys and a data interface (142) for handling requests for transmission of the data sets, from which at least one data set stored in the data storage area is decryptable using the decryption keys (111).

## Description

The invention relates to a smart card with data storage, a set-top box and a portable player for operating a smart card with data storage. Moreover, the invention relates to a method for manufacturing a smart card with data storage, especially a pre-recorded smart card.

The main function of a digital television set-top box is the reception and display of television data streams. Some set-top boxes are provided with additional functionality, such as accessing data stored on external data carriers. For example, a set-top box equipped with a USB interface may communicate with a USB storage device for accessing data files, such as audio clips. However, such functionality is only available for set-top boxes equipped with a particular interface, such as USB, FireWire, WiFi or similar interfaces. Moreover, typical routines of data transmission via such interfaces do not include effective security mechanisms protecting the transmitted data. Data is usually transmitted in a clear, unencrypted form and therefore can be easily copied and distributed among various devices. Implementing an additional security mechanism would require adapting the software of the set-top box, which would require considerable workload and resources.

The functionality of communicating data between a set-top box and portable data storage is highly appreciated by the users. For example, the portable data storage could be used to store user's favorite music clips for later replay on the same or another set-top box. However, content providers may object to the possibility of storing unsecured data.

Therefore, there exists a need for providing a portable data storage which would enable secure exchange of data with the set-top box.

The present invention solves the problem of secure data exchange between a set-top box and a portable data storage by providing a smart card with a memory area for data storage and a memory area for decryption keys to be used by the set-top box descrambler. Due to the recent technology advancements, a smart card can be equipped with a non-volatile memory block, such as Flash memory, having a capacity of megabytes up to gigabytes. The smart card according to the invention enables storing data thereon in a secure form, which can be played only in a suitable device, having a descrambler capable of handling the decryption keys. Therefore, data stored on the smart card cannot be accessed for easy copying and distributing among various devices. Furthermore, the smart card has a processor, which is provided with a decryption keys interface for handling requests for the decryption keys and a data interface for handling requests for transmission of the data sets. Moreover, at least one data set stored in the data storage area is decryptable using the decryption keys.

At least one data set stored in the data storage area can be decryptable using decryption keys provided by another smart card.

Preferably, the decryption keys area comprises decryption keys for descrambling data external to the smart card.

The data storage area can comprise pre-stored data area and user data area.

Furthermore, such a smart card enhances the functionality of digital television set-top boxes not equipped with any standard interface for connecting external data storage. Such a digital television set-top box consists of a signal receiving block for receiving a digital television signal TV and providing a first data stream S1, a descrambler receiving the first data stream S1 and a second data stream S2 and decrypting encrypted data using decryption keys K and providing a decrypted data stream DS comprising decrypted data of the first data stream S1 and/or the second data stream S2, an audio/video decoder receiving the decrypted data stream DS, decoding the received data and providing an output signal OUT as well as a smart card interface for communicating with a smart card with memory and providing to the descrambler the decryption keys K and the second data stream S2 read from the smart card memory.

It is advantageous that the signal receiving block further provides to the smart card interface a third data stream S3 to be stored in the smart card memory.

The decrypted data stream DS can be input to the smart card interface to be stored in the smart card memory.

According to the present invention the digital television set-top box can also comprise a digital video recording system providing to the smart card interface a fourth data stream S4 to be stored in the smart card memory, a digital video recording system reading from the smart card interface a fifth data stream S5 to be stored in the digital video recording system memory and a software update manager receiving software updates whereas the smart card interface is a software object which is updatable by the software update manager.

The idea of the invention is also that a portable player for handling the above-described smart cards has a decoder receiving a decrypted data stream DS and decoding the received data and providing an output signal OUT, a descrambler receiving a first data stream S1 and decrypting encrypted data using decryption keys K and providing a decrypted stream DS, a smart card interface for communicating with a smart card with memory and providing to the descrambler the decryption keys K and the first data stream S1 read from the smart card memory and a USB interface for communicating with an external device, providing a second data stream S2 to be stored in the smart card memory.

Preferably, the smart card interface further provides a third data stream S3 to the USB interface to be transmitted to the external device.

The decrypted data stream DS can be further provided to the USB interface to be transmitted to the external device.

It is favorable that the decoder is an audio/video decoder or an audio decoder.

According to the present invention the portable player can further comprise a display and a loudspeaker playing the output signal OUT.

Furthermore, the present invention provides a method for manufacturing pre-recorded cards comprising the step of providing a smart card with encryption keys memory and data storage area, providing files, providing decryption keys, scrambling the files using the decryption keys and storing the encrypted files and the decryption keys on the smart card,

The present invention will now be described with reference to the accompanying drawings, in which:
Fig. 1 shows a block diagram of a first embodiment of a smart card;
Fig. 2 shows a block diagram of an enhanced embodiment of the smart card;
Fig. 3 shows a block diagram of a first embodiment of a digital television set-top box;
Fig. 4 shows a block diagram of a second embodiment of the digital television set-top box;
Fig. 5 shows a block diagram of a third embodiment of the digital television set-top box;
Fig. 6 shows a block diagram of a fourth embodiment of the digital television set-top box;
Fig. 7 shows a block diagram of a fifth embodiment of the digital television set-top box;
Fig. 8 shows a block diagram of a first embodiment of a portable player;
Fig. 9 shows a block diagram of a second embodiment of the portable player; and
Fig. 10 shows a flow diagram of a procedure for manufacturing a pre-recorded smart card.

The embodiments presented in the drawings are intended only for illustrative purpose and do not limit the scope of the invention, as defined by the accompanying claims.

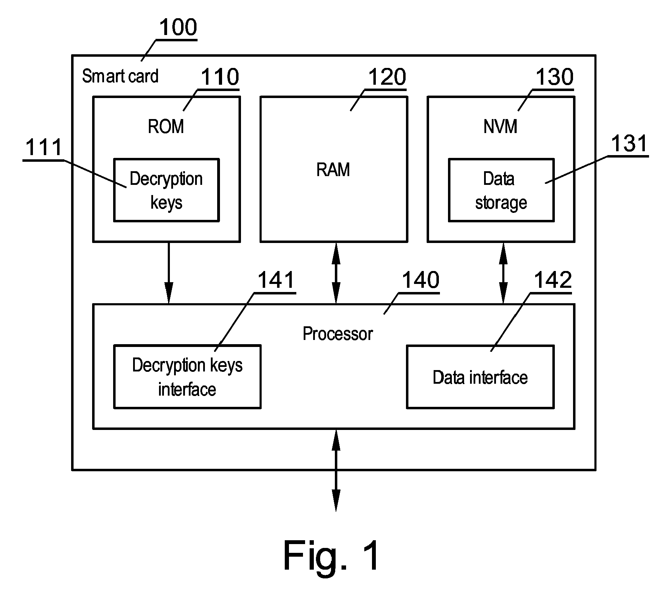

Fig. 1 presents a smart card according to the invention. The smart card 100 comprises a processor 140 and memory blocks, including a ROM memory 110, RAM memory 120 and non-volatile memory 130, for example a Flash memory. The ROM memory block 110 stores decryption keys 111 to be transmitted to an external device for descrambling data. The RAM memory 120 is used for processor operation procedures. The non-volatile memory block 130, for example a Flash memory block, comprises a data storage area 131 for storing additional data. Alternatively, the decryption keys may be stored in the non-volatile memory in addition or instead of the decryption keys stored in the read-only memory. The format of storage of data sets is defined by the operating system. For example, data sets may be stored in form of files, arranged according to a file system compatible with the file system of the external device with which the smart card is to be used. The data format and coding may be also application-specific. For example, audio data may be stored in MP3, WMA, AAC or other formats. The files may describe an audio/video data stream, an audio data stream or other data. The processor 140 provides interfaces for communication of the smart card with external device. For example, a decryption keys interface 141 provides decryption keys and a data interface 142 provides data stored in the data storage area of the non-volatile memory.

The card as presented above can provide audio/video or audio data to an external device such as a digital television set-top box or a portable smart card player. Moreover, it can be used to record data provided by the external device, such as television programming or audio clips.

The essential feature of the smart card of the invention is that at least some of the data stored in the data storage area are encrypted to prevent their unauthorized, direct copying. For example, some of the data sets can be stored in an encrypted form and some can be stored in a clear form. Alternatively, only fragments of data sets may be encrypted. The data can be decrypted using the decryption keys 111 stored on the same smart card. In addition, data can be decrypted using decryption keys stored on another card.

The decryption keys 111 may be used for descrambling data encrypted with various scrambling algorithms, supported by various conditional access systems providers, such as for example Nagra, NDS, Conax or Irdeto.

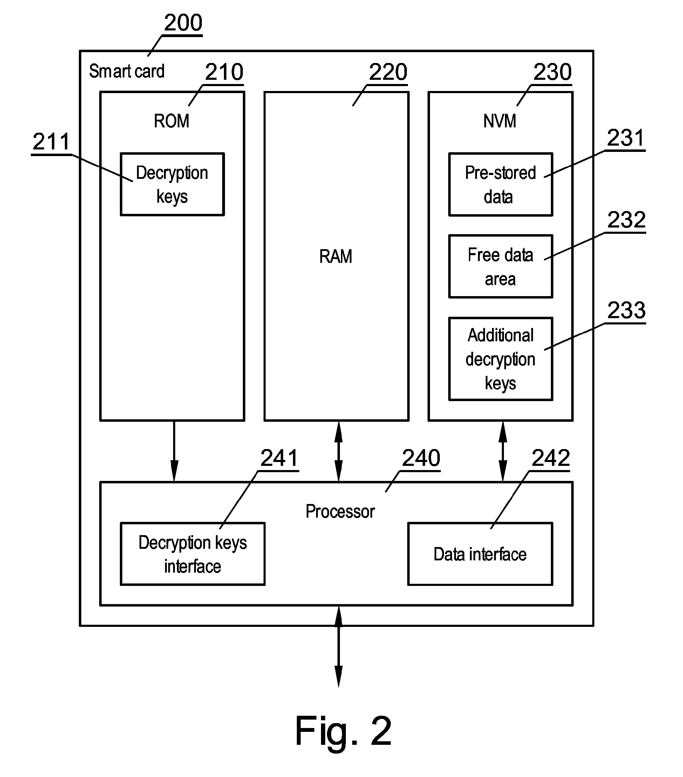

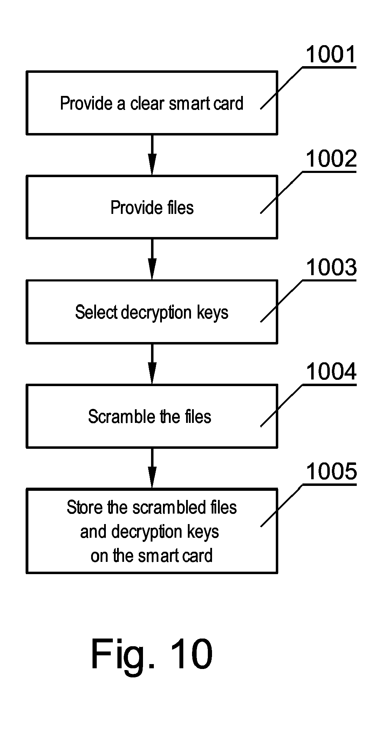

Fig. 2 presents an enhanced embodiment of the smart card 200 according to the invention. The data storage area of the non-volatile memory 230 comprises two data areas: a first area containing pre-stored data 231 and a second area for storing user data 232. The pre-stored data may be recorded in the card manufacturing process, before the card is sold in retail, for example a music album, as described in more details in Fig. 10. The pre-stored data area may be erasable, i.e. the user may erase the data and use the area for storing other data. The smart card 200 also comprises a processor 240 with a decryption keys interface 241 and a data interface 242 as well as memory blocks, including a ROM memory 210 with decryption keys 211 and RAM memory 220.

In addition, the non-volatile memory block 230 may comprise a decryption keys area for storing additional decryption keys 233. For example, an external device may provide to the card a data file and decryption keys necessary to descramble it. This would prevent direct copying of the data file for use in another device.

The files may be stored in the data storage area in such a way that along with decryption keys, an identifier is stored, which specifies what kind of decryption keys should be used to descramble the file. The decryption keys identifier may identify keys stored on the same smart card or stored at a remote location, for example on another smart card.

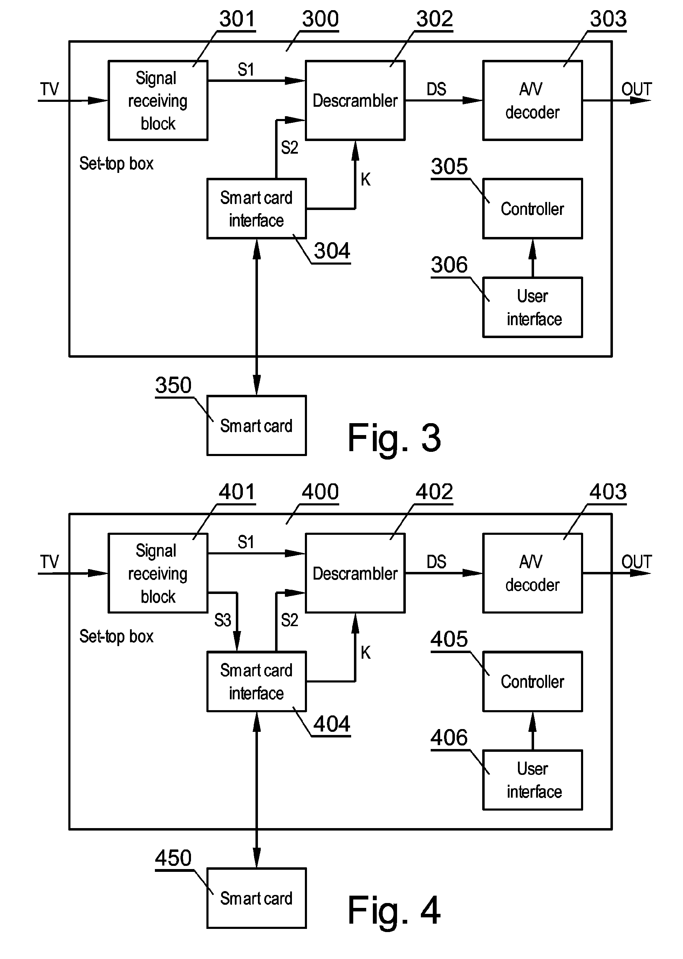

Fig. 3 presents a first embodiment of a digital television set-top box 300 according to the invention. The set-top box 300 comprises a signal receiving block 301 receiving a cable, satellite, terrestrial or IP digital television signal. The signal receiving block performs signal demodulation and provides a first data stream S1, which may comprise clear or encrypted data. The first data stream S1 is input to a descrambler 302, which is responsible for decrypting the received encrypted data using decryption keys. A clear, decrypted data stream DS is provided at the descrambler output. The descrambler may be deactivated if the received stream or its fragment is not encrypted. The decrypted stream is input to an audio/video decoder 303, which is responsible for decoding the received data and providing an output decoded stream to external devices, such as a television set or an audio amplifier. The audio/video decoder may comprise several decoders for various data formats. A smart card interface 304 communicates with one or several smart cards 350 inserted in smart card slots of the decoder to exchange data. It reads decryption keys K from the smart card and provides them to the descrambler. Furthermore, the smart card interface reads a second data stream S2 from the smart card memory, which is input to the descrambler. The second data stream S2 may also contain encrypted or clear data. The decrypted stream DS provided at the descrambler output comprises decrypted data of the first data stream S1 and/or the second data stream S2.

The flow of data in the set-top box is controlled by a controller module 305, which coordinates the operation of individual modules responsively to requests input by the user via a user interface 306, for example a remote controller. The controller 305 may select the contents of the first data stream S1 output from the signal receiving block by tuning it to a specific channel and extracting specific data. It may also communicate with the smart card interface 304 to present the contents of the smart card memory to allow the user selecting particular data to be transmitted in the second data stream S2.

The keys necessary for decryption of the first data stream S1 and the second data stream S2 may be read from one or more cards. In one embodiment, a single card may provide encryption keys for both streams. In another embodiment, one smart card may provide decryption keys for the first data stream S1, while the other smart card can provide the second data stream S2 and the decryption keys for descrambling the second data stream S2.

The second data stream S2 includes the contents of a selected data set stored in the smart card memory. The data set may represent an audio/video file, for example a movie. Alternatively, it may be an audio file, for example a music clip. The data may be encoded in any format handled by the audio/video decoder.

Fig. 4 presents a second embodiment of the set-top box 400 according to the invention. In comparison to the set-top box 300 shown in Fig. 3, the signal receiving block 401 can provide not only a first data stream S1 to a descrambler 402 and then to a A/V decoder 403 but can also provide a third data stream S3 to the smart card interface 404 to be stored in the smart card memory. This allows storing the received television data stream, for example a movie, in the smart card memory for further viewing. Alternatively, the user may store selected audio clips to collect favorite audio clips. The third data stream S3 may be encrypted or clear, depending on the system configuration. In order to play a stored encrypted stream at a later time, proper decryption keys will be necessary - either stored in the memory of the same smart card 450 or provided by another smart card. The set-top box 400 is controlled by a controller module 405, which coordinates the operation of individual modules responsively to requests input by the user via a user interface 406.

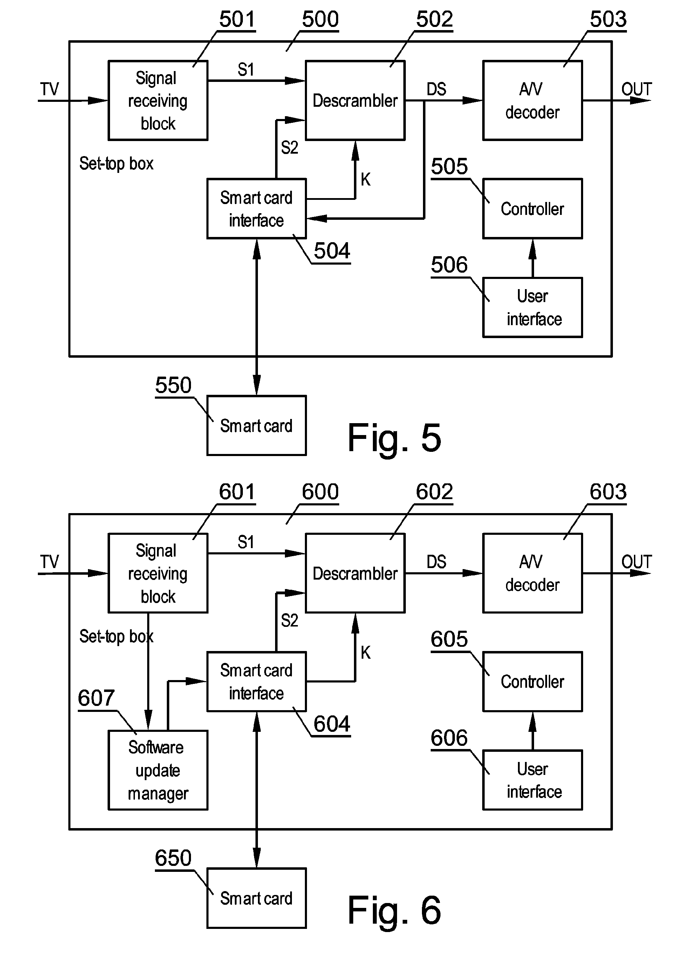

Fig. 5 presents a third embodiment of the set-top box 500 according to the invention. The signal receiving block 501 of the set-top box 500 provides a first data stream S1 to a descrambler 502. In comparison to the set-top box 300 shown in Fig. 3, the decrypted data stream DS provided by the descrambler 502 can be input not only to the A/V decoder 503 but also to the smart card interface 504 and then to the smart card 550. The stream stored in the memory of the smart card 550 can be decrypted, therefore it can be played at a later time without descrambling. The set-top box 500 has also a controller module 505, which coordinates the operation of individual modules responsively to requests input by the user via a user interface 506.

Fig. 6 presents a fourth embodiment of the set-top box 600 according to the invention. In comparison to the set-top box 300 shown in Fig. 3 and having a signal receiving block 601, a descrambler 602, an A/V decoder 603 and a smart card interface 604, it further comprises a software update manager 607 coupled to the signal receiving block 601, for handling software updates. The software update manager may 607 re-configure various blocks of the set-top box according to received data, including re-configuration of the smart card interface 604. The smart-card interface 604 may be re-configured to handle a new file system of the smart card 650 or to provide another data transfer protocol. Furthermore, it may be used to enhance the functionality of set-top boxes which previously did not handle smart card file transfer at all, by providing file transfer functionality to the smart card interface. The set-top box 600 has also a controller module 605, which coordinates the operation of individual modules responsively to requests input by the user via a user interface 606.

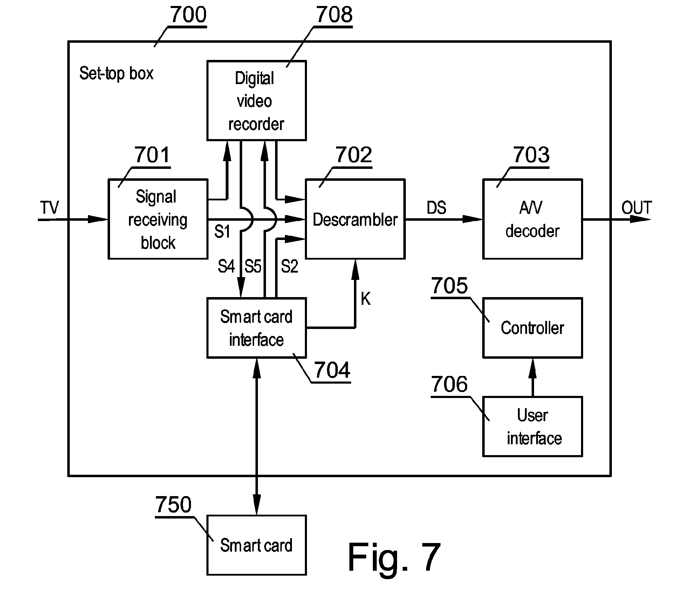

Fig. 7 presents a fifth embodiment of the set-top box 700 that comprises a signal receiving block 701, a descrambler 702, an A/V decoder 703, a smart card interface 704. In comparison to the set-top box 300 shown in fig. 3, it further comprises a digital video recording block 708, connected to the signal receiving block 701 for recording the received signal and to the descrambler 702 for outputting the recorded signal. The digital video recording block 708 comprises a large capacity data storage, such as a hard disk. The digital video recording block 708 is coupled to the smart card interface 704 for exchanging data with the smart card 750. A data stream S4 may be transferred from the digital recording block 708 to the smart card interface 704, and a data stream S5 may be transmitted from the smart card interface 704 to the digital video recording block 708. In another embodiment, the transmission may be unidirectional only. By allowing only data transmission from the smart card 750 to the digital video recorder 708, the possibility of transferring data between various set-top boxes is limited. By allowing data transmission only from the digital video recorder 708 to the smart card 750, data is prevented to be copied from the smart card to various set-top boxes with a digital video recording system. The set-top box 700 has also a controller module 705, which coordinates the operation of individual modules responsively to requests input by the user via a user interface 706.

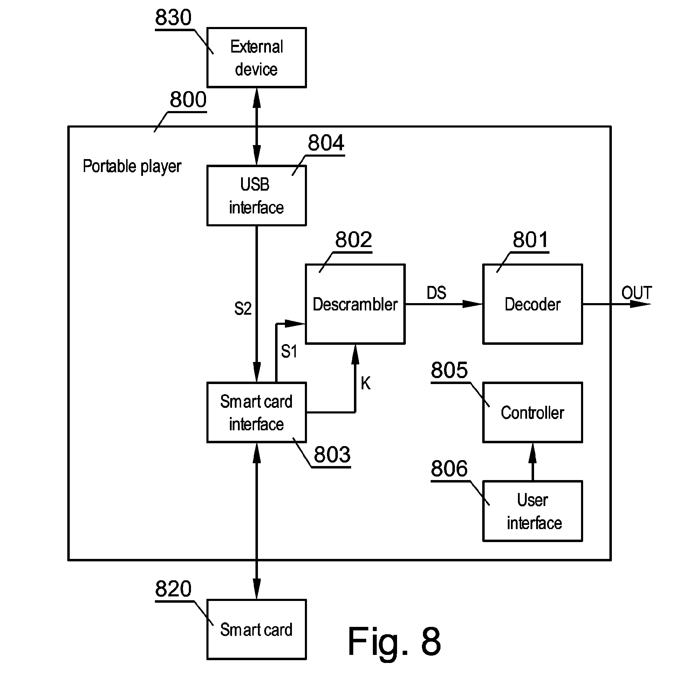

Fig. 8 presents a first embodiment of a portable player 800 according to the invention. This may be an audio/video or audio player. Such a player can be used by a set-top box owner to play the files stored by the set-top box at a remote location. For example, the user may store favorite audio clips on a smart card and insert the smart card to the portable player for further listening. Alternatively, a pre-paid smart card can be purchased to listen to audio clips of a specific performer, as described in more details in Fig. 10. The portable player comprises a smart card interface 803 for exchanging data with a smart card 820. A first data stream S1 read from the smart card 820 is input to a descrambler 802, which decrypts received encrypted data using decryption keys K read from the smart card. A stream of decrypted data DS is input to the decoder 801, which may be audio/video or audio decoder, depending on the type of the portable player. The decoder provides an output signal, for example an audio/video signal for an external television set, or an audio signal for headphones.

In addition, the portable player comprises a USB interface 804 for communicating with an external device 830, such as a personal computer or a set-top box equipped with the USB interface. The USB interface enables transmission of a second data stream S2 between the smart card and the external device. For example, unencrypted data may be transmitted from a personal computer to the smart card memory for further playing.

The flow of data in the portable player is controlled by the controller module 805, which coordinates the operation of individual modules responsively to requests input by the user via the user interface 806, for example a remote controller.

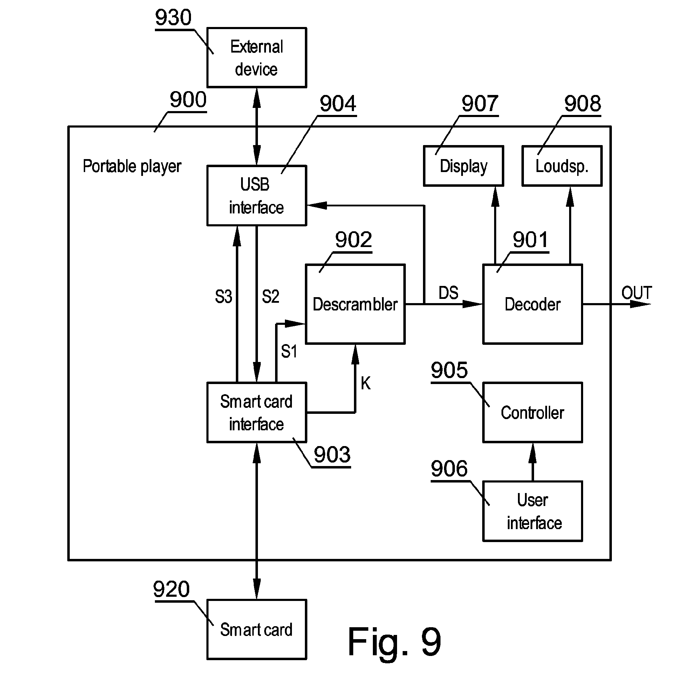

Fig. 9 presents a second embodiment of a portable player 900 according to the invention. The portable player 900 comprises a smart card interface 903 for exchanging data with a smart card 920, a descrambler 902 and a decoder 901. In comparison to the portable player 800 shown in Fig. 8, a third data stream S3 can be transmitted from the smart card 920 to the external device 930. For example, unencrypted data may be transmitted from the smart card 920 to the personal computer. Furthermore, the decrypted stream DS may be transmitted to the external device as well. In addition, the portable player 900 comprises a built-in display 907 and a loudspeaker 908 coupled to the decoder 901 for providing the audio/video output to the user. For example, the display 907 may be a small, several-inches diameter LCD display. In case of an audio player, the loudspeaker 908 only may be used. The portable player 900 is controlled by the controller module 905, which coordinates the operation of individual modules responsively to requests input by the user via the user interface 906.

Fig. 10 presents a procedure for manufacturing a pre-recorded smart card according to the present invention. First, a clear, i.e. without any contents stored in the non-volatile memory, smart card is provided in step 1001. Next, in step 1002, a set of files is provided, for example a music album. Then, in step 1003, decryption keys are selected and the files are encrypted in step 1004 in such a way to be decryptable using the selected decryption keys. Next, in step 1005, the encrypted files and the decryption keys are stored on the smart card. The smart card prepared in such a way can be then provided to the client, for example in a retail store.

Furthermore, additional data may be stored on the smart card. Such data may include additional decryption keys, for example keys necessary to descramble a television stream of a particular broadcaster. In addition, the smart card may comprise additional free non-volatile memory block for storing user-defined data.

## Claims

1. A smart card comprising memory blocks and a processor **characterized in that** one (110) of the memory blocks (110, 120, 130) has a decryption keys area storing decryption keys (111) and at least one of the memory blocks is non-volatile memory (130) having data storage area (131) storing data sets, and the processor (140) is provided with a decryption keys interface (141) for handling requests for the decryption keys (141) and a data interface (142) for handling requests for transmission of the data sets wherein at least one data set stored in the data storage area is decryptable using the decryption keys (111).

2. The smart card according to claim 1, **characterized in that** at least one data set stored in the data storage area (131) is decryptable using decryption keys (233) provided by another smart card (200).

3. The smart card according to claim 1, **characterized in that** the decryption keys area comprises decryption keys (111) for descrambling data external to the smart card.

4. The smart card according to claim 1, **characterized in that** the data storage area (230) comprises pre-stored data area (231) and user data area (232).

5. A digital television set-top box, comprising:
- a signal receiving block (301), receiving a digital television signal TV and providing a first data stream S1,
- a descrambler (302) receiving the first data stream S1 and a second data stream S2, decrypting encrypted data using decryption keys K and providing a decrypted data stream DS comprising decrypted data of the first data stream S1 and/or the second data stream S2,
- an audio/video decoder (303) receiving the decrypted data stream DS, decoding the received data and providing an output signal OUT,
- a smart card interface (304), communicating with a smart card (350) with memory and providing to the descrambler the decryption keys K and the second data stream S2 read from the smart card memory.

6. The digital television set-top box according to claim 5, **characterized in that** the signal receiving block (401) further provides to the smart card interface a third data stream S3 to be stored in the smart card memory.

7. The digital television set-top box according to claim 5, **characterized in that** the descrambler (502) has an output coupled to the smartcard interface (504) to enable sending the decrypted data stream DS to the smart card interface (504) to be stored in the smart card memory.

8. The digital television set-top box according to claim 5, further comprising a digital video recording system (708) providing to the smart card interface (704) a fourth data stream S4 to be stored in the smart card memory.

9. The digital television set-top box according to claim 5, further comprising a digital video recording system (708) reading from the smart card interface (704) a fifth data stream S5 to be stored in the digital video recording system memory.

10. The digital television set-top box according to claim 5, further comprising a software update manager (607) receiving software updates wherein the smart card interface (604) is a software object which is updatable by the software update manager (607).

11. A portable player, comprising
- a decoder (801) receiving a decrypted data stream DS, decoding the received data and providing an output signal OUT,
- a descrambler (802) receiving a first data stream S1, decrypting encrypted data using decryption keys K and providing a decrypted stream DS,
- a smart card interface (803), communicating with a smart card (820) with memory and providing to the descrambler (802) the decryption keys K and the first data stream S1 read from the smart card memory,
- a USB interface (804), communicating with an external device (830), providing a second data stream S2 to be stored in the smart card memory.

12. The portable player according to claim 11, **characterized in that** the smart card interface (903) further provides a third data stream S3 to the USB interface (904) to be transmitted to the external device (930).

13. The portable player according to claim 11, **characterized in that** the decrypted data stream DS is further provided to the USB interface (904) to be transmitted to the external device (930).

14. The portable player according to claim 11, **characterized in that** the decoder is an audio/video decoder.

15. The portable player according to claim 11, further comprising a display (907) and a loudspeaker (908) playing the output signal OUT.

16. The portable player according to claim 11, **characterized in that** the decoder is an audio decoder.

17. A method for manufacturing a smart card with data storage, comprising the step of
- providing a smart card with encryption keys memory and data storage area,
- providing files,
- providing decryption keys,
- scrambling the files using the decryption keys,
- storing the encrypted files and the decryption keys on the smart card.
